# EUROPEAN PATENT APPLICATION

(11) **EP 4 261 435 A1**
(43) Date of publication of application: **18.10.2023**
(21) Application number: 22779849.3
(22) Date of filing: 08.03.2022
(51) Int. Cl.: F16H 1/06, H02K 7/116, B60K 1/00, F16H 57/021

(54) **DRIVE DEVICE FOR VEHICLE**

(30) Priority: 31.03.2021 JP 2021059968
(71) Applicant: AISIN CORPORATION, Kariya-shi, Aichi 448-8650 (JP)
(72) Inventor: ITO Morio, Kariya-shi, Aichi 448-8650 (JP)
(74) Representative: Kramer Barske Schmidtchen Patentanwälte PartG mbB
(86) International application number: PCT/JP2022/009975
(87) International publication number: WO 2022/209625

(57) **Abstract**

A vehicle drive device (100) includes a rotating electrical machine (MG), an input shaft (IN) including a first gear (G1) and connected to a rotor shaft (84), a counter gear mechanism (CG), a differential gear mechanism (DF), a pair of output members (OUT), and a case (1). The input shaft (IN) includes: a first supported portion (71) supported by the case (1) via a first bearing (B1a) located on a first side (L1) in an axial direction with respect to the first gear (G1); a connection portion (72) located on the first side (L1) in the axial direction with respect to the first supported portion (71) and connected to the rotor shaft (84); and a small diameter portion (73) located between the first supported portion (71) and the connection portion (72) and having a diameter (r73) smaller than an outside diameter (r71) of the first supported portion (71) and an outside diameter of the connection portion (72).

## Description

### TECHNICAL FIELD

The present invention relates to vehicle drive devices including: a rotating electrical machine; an input shaft that rotates with a rotor shaft of the rotating electrical machine and includes a first gear; output members drivingly connected to wheels; and a gear mechanism drivingly connecting the first gear and the output members.

### BACKGROUND ART

Japanese Unexamined Patent Application Publication No. 2019-129608 (JP 2019-129608 A) discloses a vehicle drive device including a rotating electrical machine (12) serving as a driving force source for wheels, a power transmission mechanism (16), and a case (18) housing these components (signs in parentheses in the section "BACKGROUND ART" are those in the referenced document). The power transmission mechanism (16) includes an input shaft (first rotating shaft (22a)) connected to a rotor shaft (26) of the rotating electrical machine (12), an input gear (pinion (22b)) formed on the input shaft, and a counter gear mechanism. The counter gear mechanism includes a first counter gear (large diameter gear (22d)) meshing with the input gear, and a second counter gear (small diameter gear (22c)) connected to a counter shaft (second rotating shaft (22e)) so as to rotate with the first counter gear. The rotor shaft (26) is rotatably supported by a pair of first bearings (28a, 28b), the counter shaft is rotatably supported by a pair of second bearings (30a, 30b), and the input shaft is rotatably supported by a pair of third bearings (32a, 32b). One (28b) of the pair of first bearings (28a, 28b) and one (32a) of the pair of third bearings (32a, 32b) are located adjacent to each other in the axial direction.

### Related Art Documents

### Patent Documents

Patent Document 1: Japanese Unexamined Patent Application Publication No. 2019-129608 (JP 2019-129608 A)

### SUMMARY OF THE INVENTION

### Problem to be Solved by the Invention

When power is transmitted between the rotor shaft (26) of the rotating electrical machine (12) and the input gear (pinion (22b)) via the input shaft (first rotating shaft (22a)), the input shaft is subjected to torsional vibration. The frequency of the torsional vibration on the input shaft changes according to the rigidity of the portion between the rotating electrical machine (12) and the input gear including the meshing portion between the input gear and a gear meshing with the input gear (e.g., the first counter gear (large diameter gear (22d) (so-called dynamic stiffness at the meshing point). Depending on the frequency of the torsional vibration, the sound pressure and vibration that are generated may increase and may be transmitted to the case, increasing noise in the audible range. For example, the frequency of such torsional vibration can be changed by changing the torque transmission distance (e.g., by changing the distance between the rotor shaft (26) and the input gear). However, changing the torque transmission distance may involve a significant change in layout of the vehicle drive device or may increase cost.

In view of the above circumstances, it is desired to provide a technique capable of reducing torsional vibration of an input shaft and thus reducing noise that is caused by the vibration.

### Means for Solving the Problem

In view of the above, a vehicle drive device includes: a rotating electrical machine including a rotor and a rotor shaft that rotates with the rotor; an input shaft including a first gear and connected to the rotor shaft so as to rotate with the rotor shaft; a pair of output members, the output members being drivingly connected to wheels, respectively; a counter gear mechanism including a second gear meshing with the first gear, a third gear that rotates with the second gear, and a connecting shaft connecting the second gear and the third gear; a differential gear mechanism that includes a fourth gear meshing with the third gear and that distributes rotation of the fourth gear to the pair of output members; and a case housing the rotating electrical machine, the input shaft, the counter gear mechanism, and the differential gear mechanism. The input shaft includes: a first supported portion supported by the case via a first bearing located on a first side in an axial direction with respect to the first gear; a connection portion located on the first side in the axial direction with respect to the first supported portion and connected to the rotor shaft; and a small diameter portion located between the first supported portion and the connection portion in the axial direction and having a diameter smaller than an outside diameter of the first supported portion and an outside diameter of the connection portion, the axial direction being a direction along a rotation axis of the rotor, the first side in the axial direction being a side in the axial direction on which the rotor is located with respect to the first gear, and a second side in the axial direction being an opposite side in the axial direction to the first side in the axial direction.

According to this configuration, the input shaft includes the small diameter portion between the first supported portion and the connection portion. This makes it possible to make an adjustment to partially reduce the rigidity of the portion that transmits torque from the rotor to the first gear. The resonance point of torsional vibration of the input shaft that is caused by vibration generated at the meshing portion of the plurality of gears is thus shifted, so that the sound pressure and vibration that are transmitted to the case can be reduced. In other words, vibration can be reduced by a simple structure, namely by merely providing the small diameter portion in part of the input shaft. For example, vibration can be reduced more easily and at lower cost as compared to the case where vibration is reduced by changing the distance in the axial direction between components (e.g., between the rotor and the first gear). According to this configuration, vibration of the input shaft can thus be reduced, so that noise that is caused by the vibration can be reduced.

Further features and advantages of the vehicle drive device will become apparent from the following description of an illustrative and non-limiting embodiment that will be given with reference to the drawings.

### BRIEF DESCRIPTION OF THE DRAWINGS

[FIG. 1] FIG. 1 is an axial sectional view of a vehicle drive device (first vehicle drive device).
[FIG. 2] FIG. 2 is a skeleton diagram of the vehicle drive device (first vehicle drive device).
[FIG. 3] FIG. 3 is an axial partial enlarged sectional view of the vehicle drive device (first vehicle drive device).
[FIG. 4] FIG. 4 is an axial sectional view of a vehicle drive device (second vehicle drive device).
[FIG. 5] FIG. 5 is a skeleton diagram of the vehicle drive device (second vehicle drive device).
[FIG. 6] FIG. 6 is an axial partial enlarged sectional view of the vehicle drive device (second vehicle drive device).
[FIG. 7] FIG. 7 is an axial partial enlarged sectional view of a vehicle drive device of a comparative example.

### MODES FOR CARRYING OUT THE INVENTION

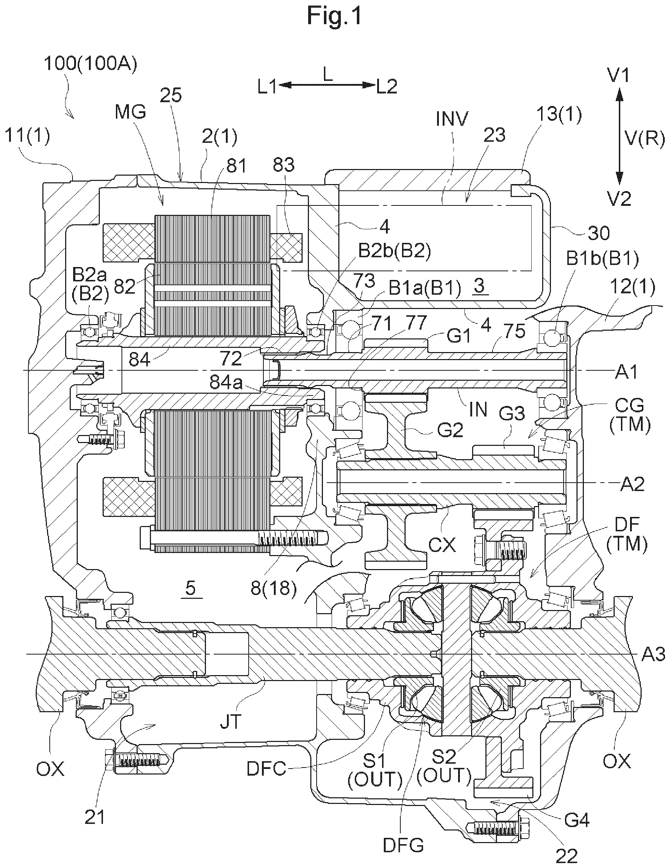

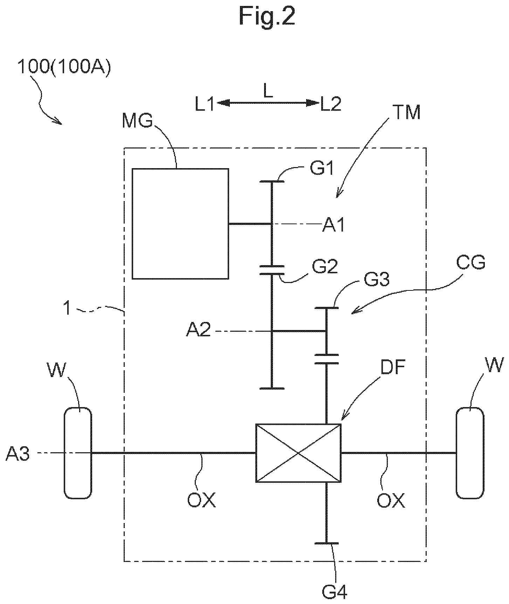

Hereinafter, an embodiment of the present invention will be described with reference to the drawings. As shown in the axial sectional view of FIG. 1 and the skeleton diagram of FIG. 2. a vehicle drive device 100 includes a rotating electrical machine MG, an input shaft IN, a pair of output members OUT, a counter gear mechanism CG, a differential gear mechanism DF, and a case 1 housing these components. As will be described in detail later, the rotating electrical machine MG includes a rotor 82 and a rotor shaft 84 that rotates with the rotor 82. The input shaft IN includes an input gear G1 (first gear) and is connected to the rotor shaft 84 so as to rotate with the rotor shaft 84. The pair of output members OUT is drivingly connected to wheels W. The counter gear mechanism CG includes a first counter gear G2 (second gear) meshing with the input gear G1, a second counter gear G3 (third gear) that rotates with the first counter gear G2, and a counter connecting shaft CX connecting the first counter gear G2 and the second counter gear G3. The differential gear mechanism DF includes a differential input gear G4 (fourth gear) meshing with the second counter gear G3, and distributes rotation of the differential input gear G4 to the pair of output members OUT. The rotating electrical machine MG is a driving force source for the pair of wheels W, and the input gear G1, the counter gear mechanism CG, and the differential gear mechanism DF serve as a transmission mechanism TM that transmits a driving force between the rotating electrical machine MG and the output members OUT. Connection portions of a pair of side gears (first side gear S1 and second side gear S2) of the differential gear mechanism DF with an output connecting shaft JT and an output shaft OX, respectively, are the pair of output members OUT.

In the present embodiment, the vehicle drive device 100 further includes an inverter device INV that drives and controls the rotating electrical machine MG. The case 1 includes a case body 2 and a cover member (first cover 11, second cover 12, and third cover 13) joined to the case body 2. The case body 2 is integrally formed so as to form a first housing chamber 5 that houses the rotating electrical machine MG, the input shaft IN, the pair of output members OUT, the counter gear mechanism CG, and the differential gear mechanism DF, and a second housing chamber 3 that houses the inverter device INV. As used herein, the expression "integrally formed" refers to a single-piece member made of the same material and formed as, for example, a single die casting. The case body 2 includes a partition wall portion 4 that separates the first housing chamber 5 and the second housing chamber 3 from each other. That is, the case 1 is integrally formed so as to have therein the first housing chamber 5 housing at least the rotating electrical machine MG and the second housing chamber 3 housing the inverter device INV and separated from the first housing chamber 5 by the partition wall portion 4. A support wall 8 extending in an axisorthogonal direction orthogonal to a first axis A1 is formed integrally with the case body 2.

As shown in FIGS. 1 and 2, the rotating electrical machine MG is disposed on the first axis A1, the counter gear mechanism CG is disposed on a second axis A2 that is a separate axis parallel to the first axis A1, and the differential gear mechanism DF and the pair of output members OUT are disposed on a third axis A3 that is a separate axis parallel to the first axis A1 and the second axis A2. That is, the first axis A1, the second axis A2, and the third axis A3 are imaginary axes different from each other, and are parallel to each other.

In the following description, the direction parallel to these axes (A1 to A3) will be referred to as "axial direction L" of the vehicle drive device 100. One side in the axial direction L (in the present embodiment, the side in the axial direction L on which the rotor 82 is located with respect to the input gear G1) will be referred to as "first side L1 in the axial direction," and the opposite side in the axial direction L will be referred to as "second side L2 in the axial direction." Each of the directions orthogonal to the first axis A1, the second axis A2, and the third axis A3 will be referred to as "radial direction R" with respect to a corresponding one of the axes. When it is not necessary to distinguish with respect to which axis the radial direction R is defined or when it is clear with respect to which axis the radial direction R is defined, the direction is sometimes simply referred to as "radial direction R." The direction extending in the vertical direction when the vehicle drive device 100 is mounted on the vehicle is defined as "up-down direction V." In the present embodiment, a first side V1 in the up-down direction that is one side in the up-down direction V is an upper side, and a second side V2 in the up-down direction that is the other side in the up-down direction V is a lower side. When the vehicle drive device 100 is mounted on the vehicle so as to be parallel to a horizontal plane, one direction of the radial direction R matches the up-down direction V. The direction orthogonal to the axial direction L and the up-down direction V will be referred to as "width direction H." One side in the width direction H will be referred to as "first side H1 in the width direction," and the other side in the width direction H will be referred to as "second side H2 in the width direction." As with the up-down direction V, one direction of the radial direction R also matches the width direction H. In the following description, terms related to the direction, position, etc. of each member represent concepts that include a member with a variation due to a manufacturing tolerance. The direction of each member represents the direction of the member when mounted in the vehicle drive device 100.

The first housing chamber 5 formed in the case 1 includes a peripheral wall portion 25 formed so as to surround the rotating electrical machine MG, the counter gear mechanism CG, and the differential gear mechanism DF. The first housing chamber 5 in the case 1 is surrounded by the peripheral wall portion 25 in the up-down direction V and the width direction H, and is open on both sides in the axial direction L. The opening on the first side L1 in the axial direction of the first housing chamber 5 will be referred to as first opening 21, and the opening on the second side L2 in the axial direction of the first housing chamber 5 will be referred to as second opening 22. The first opening 21 is closed by the first cover 11 joined to the end on the first side L1 in the axial direction of the peripheral wall portion 25. The second opening 22 is closed by the second cover 12 joined to the end on the second side L2 in the axial direction of the peripheral wall portion 25. The first housing chamber 5 is formed as a space surrounded by the peripheral wall portion 25, the first cover 11, and the second cover 12.

Part of the peripheral wall portion 25 serves as the partition wall portion 4 that separates the first housing chamber 5 and the second housing chamber 3 from each other. A housing wall 30 extending in the up-down direction V is formed from the peripheral wall portion 25. The end of the housing wall 30 is open, forming an opening (third opening 23) that opens from the second housing chamber 3 toward the outside of the case 1. The third opening 23 is closed by the third cover 13 joined to the end of the housing wall 30. That is, the second housing chamber 3 is formed as a space surrounded by the partition wall portion 4 (peripheral wall portion 25), the housing wall 30, and the third cover 13.

The rotating electrical machine MG is a rotating electrical machine (motor/generator) that runs on multi-phase alternating current (e.g., three-phase alternating current), and can function as both an electric motor and a generator. The rotating electrical machine MG is supplied with electric power from a direct current power supply (high-voltage direct current power supply), not shown, to perform power running, or supplies (regenerates) electric power generated by the inertial force of the vehicle to the direct current power supply. The direct current power supply is a high-voltage high-capacity direct current power supply formed by, for example, a secondary battery such as a nickel-metal hydride battery or a lithium-ion battery, an electric double layer capacitor, etc., and the rated power supply voltage is, for example, 200 to 400 volts.

The rotating electrical machine MG is driven and controlled by the inverter device INV. The inverter device INV includes: an inverter circuit (not shown) connected to the direct current power supply and the rotating electrical machine MG, including a plurality of switching elements, and configured to convert electric power between direct current power and multi-phase alternating current power; and an inverter control device (not shown) configured to control the inverter circuit. The inverter circuit is configured as a power module integrating, for example, a plurality of power switching elements (such as insulated gate bipolar transistors (IGBTs) or power metal oxide semiconductor field effect transistors (MOSFETs)). The inverter device INV further includes a smoothing capacitor configured to smooth the voltage on the direct current side of the inverter circuit, and is configured as a unit including the inverter control device and the inverter circuit (power module) that are described above. The inverter device INV as a unit is disposed in the second housing chamber 3 in the case 1, and is fixed to the case 1 with fastening members such as bolts.

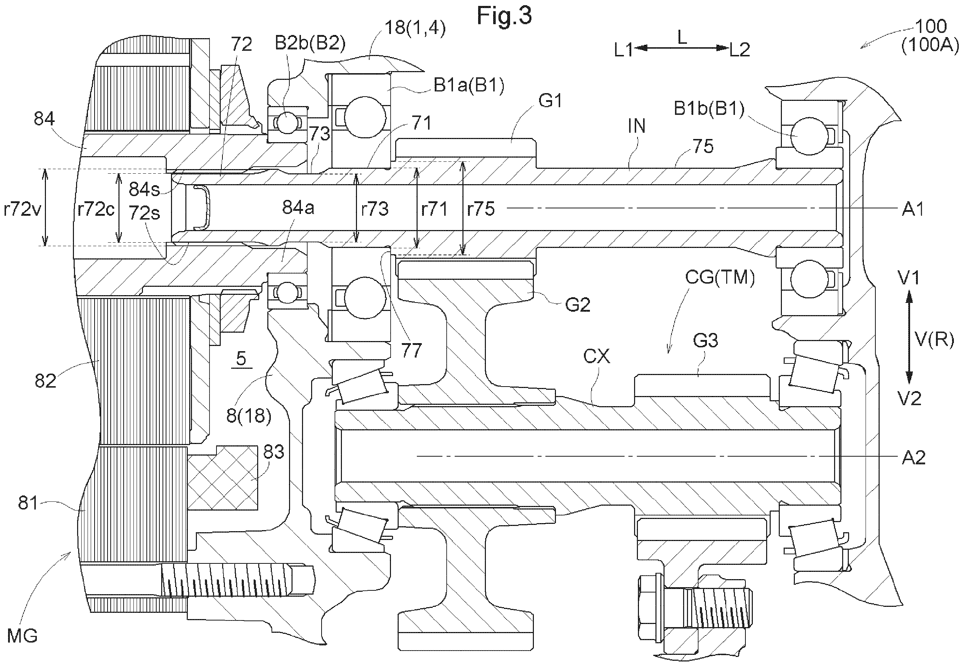

As shown in FIG. 1, the rotating electrical machine MG includes a stator 81 fixed to the case 1 etc., and the rotor 82 rotatably supported radially inside the stator 81. The stator 81 includes a stator core and a stator coil 83 wound around the stator core, and the rotor 82 includes a rotor core and permanent magnets disposed in the rotor core. As shown in FIG. 3, the inner peripheral surface of the rotor shaft 84 is provided with a spline engaging portion 84s. The outer peripheral surface of the input shaft IN is provided with a spline engaged portion 72s. The rotor shaft 84 and the input shaft IN are connected by spline engagement between the spline engaging portion 84s and the spline engaged portion 72s so that the rotor shaft 84 and the input shaft IN rotate together. The input gear G1 is formed on the input shaft IN, and the rotor 82 of the rotating electrical machine MG is drivingly connected to the input gear G1 (see FIGS. 1 and 3) via the rotor shaft 84 and the input shaft IN.

The input gear G1 is drivingly connected to the counter gear mechanism CG. In the present embodiment, the counter gear mechanism CG has two gears, the first counter gear G2 and the second counter gear G3, connected by the counter connecting shaft CX. The first counter gear G2 meshes with the input gear G1, and the second counter gear G3 meshes with the differential input gear G4 of the differential gear mechanism DF. The differential gear mechanism DF is drivingly connected to the wheels W via the output shafts OX. The differential gear mechanism DF includes a plurality of bevel gears meshing with each other. In the present embodiment, the first side gear S1 on the first side L1 in the axial direction is connected to one output shaft OX via the output connecting shaft JT, and the second side gear S2 on the second side L2 in the axial direction is connected to the other output shaft OX. Rotation and torque that are input to the differential input gear G4 are distributed and transmitted to the two output shafts OX (that is, the two wheels W) via the first side gear S1 and the second side gear. The vehicle drive device 100 can thus transmit the torque of the rotating electrical machine MG to the wheels W to cause the vehicle to travel.

The input shaft IN is rotatably supported by input bearings B1. The rotor shaft 84 is rotatably supported by rotor bearings B2. The input bearings B1 include a first input bearing B1a and a second input bearing B1b. The rotor bearings B2 include a first rotor bearing B2a and a second rotor bearing B2b. In the present embodiment, the first rotor bearing B2a is located on the first side L1 in the axial direction with respect to the rotor 82, and is supported by the first cover 11. The second rotor bearing B2b is located on the second side L2 in the axial direction with respect to the rotor 82, and is supported by the support wall 8. The first input bearing B1a is located on the first side L1 in the axial direction with respect to the input gear G1, and is supported by the support wall 8. The second input bearing B1b is located on the second side L2 in the axial direction with respect to the input gear G1, and is supported by the second cover 12. The support wall 8 that supports both the first input bearing B1a and the second rotor bearing B2b is a bearing support portion 18. As shown in FIG. 1, the partition wall portion 4 extending in the up-down direction V also supports both the first input bearing B1a and the second rotor bearing B2b, and therefore part of the partition wall portion 4 is also the bearing support portion 18 (see FIG. 3). As shown in FIGS. 1 and 3, the first input bearing B1a (first bearing) is supported by the bearing support portion 18 of the case 1, and the second rotor bearing B2b (second bearing) is supported by the same bearing support portion 18 as the first input bearing B1a is. The first input bearing B1a (first bearing) and the second rotor bearing B2b (second bearing) are located adjacent to each other in the axial direction L.

As described above, the input shaft IN is rotatably supported by the support wall 8 via the first input bearing B1a on the first side L1 in the axial direction, and is supported by the second cover 12 via the second input bearing B1b on the second side L2 in the axial direction. Similarly, the counter gear mechanism CG is rotatably supported by the support wall 8 via a bearing on the first side L1 in the axial direction with respect to the first counter gear G2 and the second counter gear G3, and is rotatably supported by the second cover 12 via a bearing on the second side in the axial direction with respect to the first counter gear G2 and the second counter gear G3 (the bearings are not labeled in the figures, and the same applies to the differential gear mechanism DF). The differential gear mechanism DF is also rotatably supported by the support wall 8 via a bearing on the first side L1 in the axial direction with respect to a gear mechanism portion DFG contained in a differential gear case DFC, and is rotatably supported by the second cover 12 via a bearing on the second side in the axial direction with respect to the gear mechanism portion DFG. As described above, the first housing chamber 5 includes the support wall 8. The rotating electrical machine MG and the transmission mechanism TM can thus be appropriately housed in the first housing chamber 5 while reducing an increase in size of the case 1.

As described above, the case body 2 is integrally formed so as to form the first housing chamber 5 and the second housing chamber 3. For example, in the case of a vehicle drive device with a direct mount structure in which another case member housing the inverter device INV is mounted outside a case member in which the first housing chamber 5 is formed, the bottom wall of the case member housing the inverter device INV vibrates, and noise tends to occur due to spatial resonance. However, in the case where the second housing chamber 3 and the first housing chamber 5 are integrally formed as one case 1 (case body 2) as in the present embodiment, the second housing chamber 3 need not have a bottom wall. Accordingly, noise due to spatial resonance caused by vibration of the bottom wall is less likely to occur.

Since the case body 2 is integrally formed so as to form the first housing chamber 5 and the second housing chamber 3, the case 1 can have high rigidity as compared to the case where the case 1 is formed by combining the first housing chamber 5 and the second housing chamber 3 that are formed as separate chambers. Moreover, since the common partition wall portion 4 separating the first housing chamber 5 and the second housing chamber 3 can be used, the weight of the case 1 can be reduced as compared to the case where the two housing chambers are formed as separate chambers.

Furthermore, in the present embodiment, torsional vibration of the input shaft is reduced by the shape of the input shaft IN to reduce noise that is caused by the vibration. A characteristic structure of the input shaft IN will be described.

As described above, the input shaft IN is rotatably supported by the input bearings B1, includes the input gear G1, and is connected to the rotor shaft 84 so as to rotate with the rotor shaft 84. As shown in FIG. 3, the input shaft IN includes a first supported portion 71 supported by the first input bearing B1a (first bearing) and a connection portion 72 connected to the rotor shaft 84. The first supported portion 71 is a portion where the input shaft IN is supported by the case 1 via the first input bearing B1a located on the first side L1 in the axial direction with respect to the input gear G1. The connection portion 72 is a portion that is provided on the first side L1 in the axial direction with respect to the first supported portion 71 and connected to the rotor shaft 84. A small diameter portion 73 having a smaller diameter than the outside diameter r71 of the first supported portion 71 and the outside diameter (e.g., "r72v or r72c" described below) of the connection portion 72 is provided between the first supported portion 71 and the connection portion 72 in the axial direction L. That is, the diameter r73 of the small diameter portion 73 is smaller than the outside diameter r71 of the first supported portion 71 and the outside diameter (r72v or r72c) of the connection portion 72. It is suitable that the diameter r73 of the small diameter portion 73 be two-thirds or less of the outside diameter r71 of the first supported portion 71 because this can effectively reduce the rigidity of the input shaft IN.

The input shaft IN includes the small diameter portion 73 between the first supported portion 71 and the connection portion 72. This makes it possible to make an adjustment to partially reduce the rigidity of the portion that transmits torque from the rotor 82 to the input gear G1. The resonance point of torsional vibration of the input shaft IN that is caused by vibration generated at the meshing portion of the plurality of gears is thus shifted, so that the sound pressure and vibration that are transmitted to the case 1 can be reduced. In other words, vibration can be reduced by a simple structure, namely by merely providing the small diameter portion 73 in part of the input shaft IN. For example, vibration can be reduced more easily and at lower cost as compared to the case where vibration is reduced by changing the overall thickness of the input shaft IN or by changing the axial distance between components (e.g., between the rotor 82 and the input gear G1).

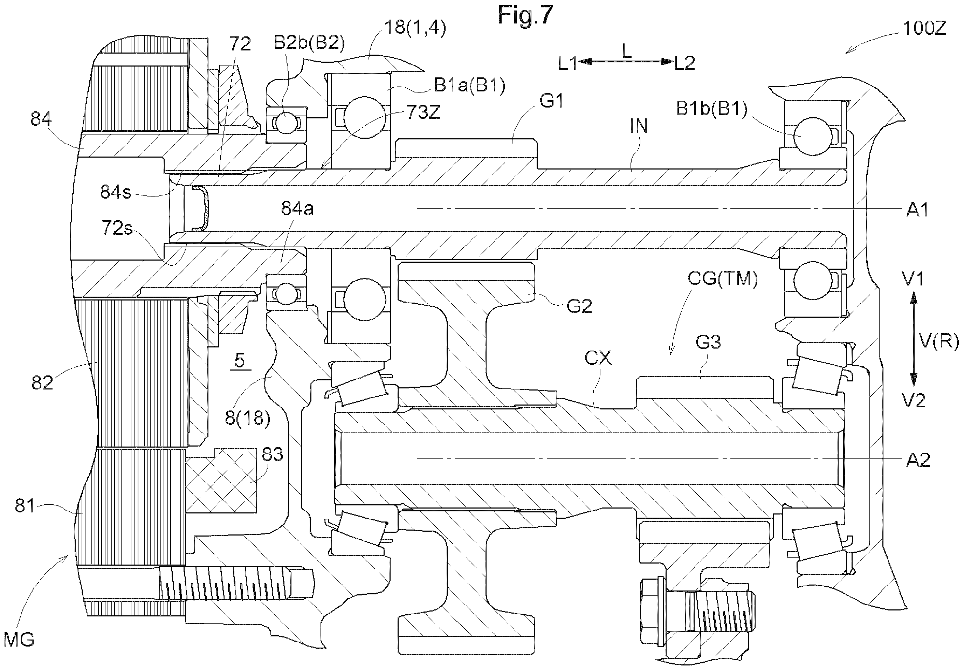

FIG. 7 is an axial partial enlarged sectional view of a vehicle drive device 100Z of a comparative example. As shown in this comparative example, the diameter of the portion where the small diameter portion 73 is formed in the present embodiment (corresponding portion 73Z) is typically substantially the same as that of the first supported portion 71 and the connection portion 72. In the present embodiment, torsional vibration of the input shaft IN is reduced by providing the small diameter portion 73, so that noise that is caused by the vibration can be reduced.

As described above, the rotor shaft 84 is rotatably supported by the first rotor bearing B2a and the second rotor bearing B2b, and the second rotor bearing B2b together with the first input bearing B1a is supported by the bearing support portion 18. As shown in FIGS. 1 and 3, the second rotor bearing B2b is located on the second side L2 in the axial direction with respect to the rotor 82 and on the first side L1 in the axial direction with respect to the first input bearing B1a (first bearing). That is, the second rotor bearing B2b is located between the rotor 82 and the first input bearing B1a in the axial direction L. Part of the rotor shaft 84 that is supported by the case 1 via the second rotor bearing B2b will be referred to as rotor shaft supported portion 84a. That is, the rotor shaft 84 includes the rotor shaft supported portion 84a. As shown in FIGS. 1 and 3, the small diameter portion 73 of the input shaft IN is located so as to overlap the rotor shaft supported portion 84a as viewed in the radial direction along the radial direction R of the input shaft IN.

If the small diameter portion 73 is located on, for example, the second side L2 in the axial direction with respect to the rotor shaft supported portion 84a, the dimension in the axial direction L of the input shaft IN may increase by an amount corresponding to the area where the small diameter portion 73 is located. However, the small diameter portion 73 and the rotor shaft supported portion 84a overlap each other as viewed in the radial direction. This can reduce an increase in dimension in the axial direction L of the vehicle drive device 100 that is caused by providing the small diameter portion 73.

As described above, in the present embodiment, the second rotor bearing B2b is supported by the same bearing support portion 18 as the first input bearing B1a is. Since the first input bearing B1a and the second rotor bearing B2b are supported by the same bearing support portion 18, vibration from the rotating electrical machine MG to the input shaft IN tends to be transmitted to the case 1. However, such transmission of vibration is reduced by providing the small diameter portion 73 as in the present embodiment. In other words, in the structure in which the first input bearing B1a and the second rotor bearing B2b are supported by the same bearing support portion 18 in order to achieve reduction in size, providing the small diameter portion 73 in the input shaft IN is effective because it reduces the transmission of vibration to the case 1 while reducing an increase in dimension in the axial direction L.

In the present embodiment, as described above, the rotor shaft 84 and the input shaft IN are connected by spline engagement and rotate together. That is, the inner peripheral surface of the rotor shaft 84 is provided with the spline engaging portion 84s and the outer peripheral surface of the connection portion 72 is provided with the spline engaged portion 72s so that the rotor shaft 84 and the connection portion 72 are spline-engaged with each other. The small diameter portion 73 has a smaller diameter than the diameter r72v of an imaginary circle connecting the tops of protrusions of the spline engaged portion 72s. The small diameter portion 73 can thus be appropriately formed to reduce the rigidity of the small diameter portion 73 compared to the remaining part of the input shaft IN. In the present embodiment, the diameter r73 of the small diameter portion 73 is equal to the diameter of an imaginary circle connecting the bottoms of recesses. The diameter r73 of the small diameter portion 73 need only be smaller than the diameter r72v of the imaginary circle connecting the tops of the protrusions of the spline engaged portion 72s, and may be greater than the diameter r72c of the imaginary circle connecting the bottoms of the recesses of the spline engaged portion 72s. When the diameter r73 of the small diameter portion 73 is equal to or smaller than the diameter r72c of the imaginary circle connecting the bottoms of the recesses of the spline engaged portion 72s, machining of the spline engaged portion 72s can be easily performed using the small diameter portion 73 adjacent to the spline engaged portion 72s in the axial direction L.

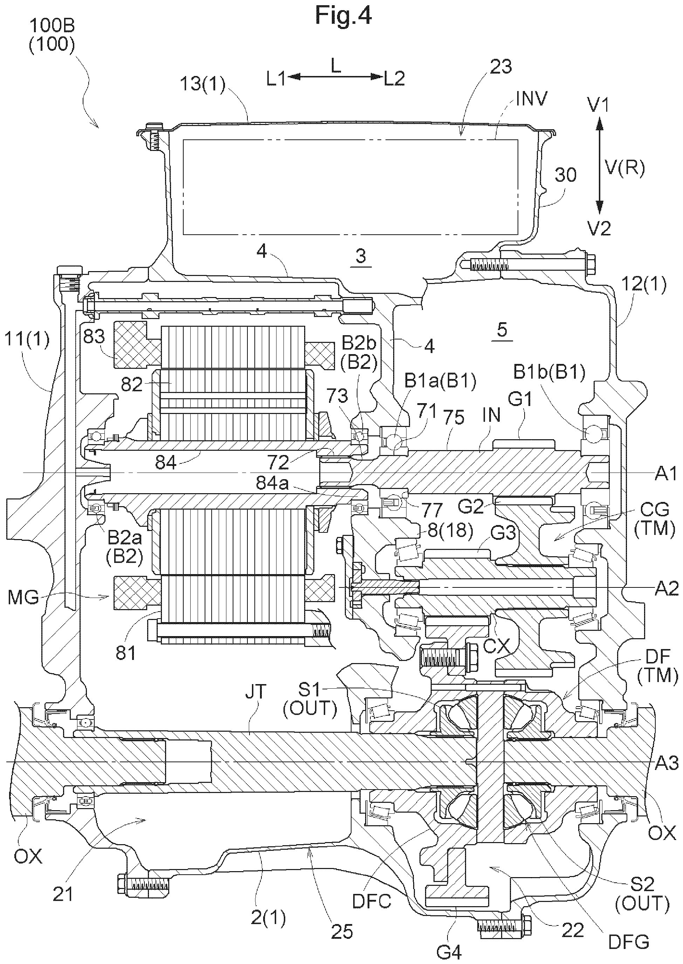

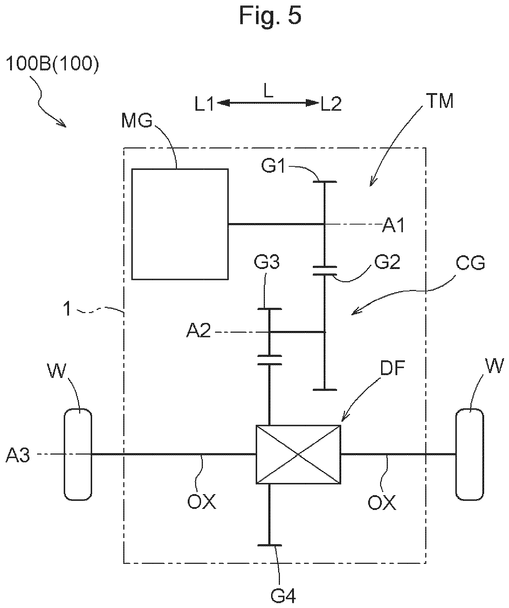

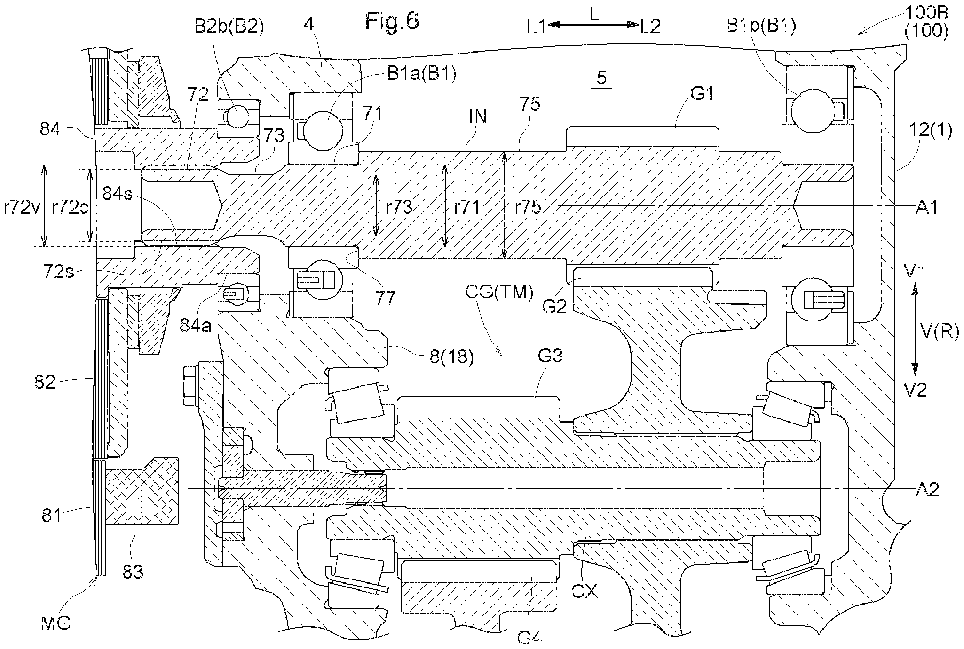

FIGS. 4 to 6 illustrate another embodiment of the vehicle drive device 100 (second vehicle drive device 100B). Hereinafter, the vehicle drive device 100 described above with reference to FIGS. 1 to 3 will be referred to as first vehicle drive device 100A when distinguishing it from the second vehicle drive device 100B. The second vehicle drive device 100B will be described below. Like portions will be denoted with the same signs as those of the first vehicle drive device 100A.

The second vehicle drive device 100B also includes: the rotating electrical machine MG including the rotor 82 and the rotor shaft 84 that rotates with the rotor 82; the input shaft IN including the input gear G1 (first gear) and connected to the rotor shaft 84 so as to rotate with the rotor shaft 84; the pair of output members OUT drivingly connected to the wheels W; the counter gear mechanism CG including the first counter gear G2 (second gear) meshing with the input gear G1, the second counter gear G3 (third gear) that rotates with the first counter gear G2, and the counter connecting shaft CX (connecting shaft) connecting the first counter gear G2 and the second counter gear G3; the differential gear mechanism DF that includes the differential input gear G4 (fourth gear) meshing with the second counter gear G3 and that distributes rotation of the differential input gear G4 to the pair of output members OUT; and the case 1 housing the rotating electrical machine MG, the input shaft IN, the counter gear mechanism CG, and the differential gear mechanism DF. The definitions of the axial direction L, the radial direction R, etc. are the same as those described above with reference to FIGS. 1 to 3. In the second vehicle drive device 100B as well, the input shaft IN includes: the first supported portion 71 supported by the case 1 via the first input bearing B1a located on the first side L1 in the axial direction with respect to the input gear G1; the connection portion 72 provided on the first side L1 in the axial direction with respect to the first supported portion 71 and connected to the rotor shaft 84; and the small diameter portion 73 provided between the first supported portion 71 and the connection portion 72 in the axial direction L and having a diameter (r73) smaller than the outside diameter r71 of the first supported portion 71 and the outside diameter (in this example, "r72c" of the connection portion 72.

In the second vehicle drive device 100B as well, the rotor shaft 84 includes the rotor shaft supported portion 84a supported by the case 1 via the second rotor bearing B2b that is located on the second side L2 in the axial direction with respect to the rotor 82 and on the first side L1 in the axial direction with respect to the first input bearing B1a. The small diameter portion 73 is located so as to overlap the rotor shaft supported portion 84a as viewed in the radial direction along the radial direction R of the input shaft IN.

In the second vehicle drive device 100B as well, the first input bearing B1a is supported by the bearing support portion 18 of the case 1. The second rotor bearing B2b is also supported by the same bearing support portion 18 as the first input bearing B1a is.

In the second vehicle drive device 100B as well, the rotor shaft 84 and the input shaft IN are connected by spline engagement and rotate together. That is, the inner peripheral surface of the rotor shaft 84 is provided with the spline engaging portion 84s and the outer peripheral surface of the connection portion 72 is provided with the spline engaged portion 72s so that the rotor shaft 84 and the connection portion 72 are spline-engaged with each other. As in the first vehicle drive device 100A, in the second vehicle drive device 100B as well, the small diameter portion 73 has a smaller diameter than the diameter r72v of the imaginary circle connecting the tops of the protrusions of the spline engaged portion 72s. In the first vehicle drive device 100A, the diameter r73 of the small diameter portion 73 is equal to the diameter of the imaginary circle connecting the bottoms of the recesses. In the second vehicle drive device 100B, however, the small diameter portion 73 is formed so that the diameter r73 of the small diameter portion 73 is equal to or smaller than the diameter r72c of the imaginary circle connecting the bottoms of the recesses of the spline engaged portion 72s. In this case, for example, machining of the spline engaged portion 72s can be easily performed using the small diameter portion 73 adjacent to the spline engaged portion 72s in the axial direction L. As described above, it is suitable that the diameter r73 of the small diameter portion 73 be two-thirds or less of the outside diameter r71 of the first supported portion 71 because this can effectively reduce the rigidity of the input shaft IN.

In both the first vehicle drive device 100A and the second vehicle drive device 100B, a first bearing positioning portion 77 for positioning the first input bearing B1a in the axial direction L is formed in the input shaft IN of the vehicle drive device 100. Therefore, the diameter r75 of the portion of the input shaft IN that is located between the first supported portion 71 and the input gear G1 is greater than the outside diameter r71 of the first supported portion 71 along part of or the entire axial length of this portion of the input shaft IN. On the other hand, the outside diameter of the portion of the input shaft IN that is located between the first supported portion 71 and the connection portion 72 can be made equal to or smaller than the outside diameter r71 of the first supported portion 71. It is therefore suitable that the small diameter portion 73 be provided between the first supported portion 71 and the connection portion 72, namely in the portion that can be formed with a relatively small diameter, rather than in the portion where the outside diameter of the input shaft IN is increased.

The relationship between the position of the small diameter portion 73 in the input shaft IN and its effect on reduction in torsional vibration will be described.

In both the first vehicle drive device 100A and the second vehicle drive device 100B, the small diameter portion 73 is provided between the first supported portion 71 and the connection portion 72. For example, in the case of the first vehicle drive device 100A in which the first supported portion 71 and the input gear G1 are substantially adjacent to each other in the axial direction L, the small diameter portion 73 may be formed on the second side L2 in the axial direction with respect to the input gear G1. In the case of the second vehicle drive device 100B in which the input gear G1 is located on the second side L2 in the axial direction and the distance between the first supported portion 71 and the input gear G1 is large, the small diameter portion 73 may be formed in a shaft portion 75 between the first supported portion 71 and the input gear G1.

For example, in the case where the small diameter portion 73 is formed on the second side L2 in the axial direction with respect to the input gear G1 in the first vehicle drive device 100A, it means that the small diameter portion 73 is provided at a position out of a torque transmission path (torque transmission path from the input gear G1 to the first counter gear G2). That is, since the small diameter portion 73 is provided at a position different from the portion of the input shaft IN that is subjected to torsional vibration, this configuration is not very effective in reducing the torsional vibration of the input shaft IN to reduce noise that is caused by the vibration. In this case, the small diameter portion 73 is provided in the portion of the input shaft IN that tends to be subjected to bending stress (portion of the input shaft IN that is located between the pair of input bearings B1). This is very effective in reducing high frequency vibration with a frequency higher than that of the torsional vibration.

For example, in the case where the small diameter portion 73 is formed between the first supported portion 71 and the input gear G1 in the second vehicle drive device 100B, torsional stress is partially relieved in the first supported portion 71. Therefore, this configuration is more effective in reducing torsional vibration of the input shaft IN to reduce noise that is caused by the vibration than in the case where the small diameter portion 73 is formed on the second side L2 in the axial direction with respect to the input gear G1 in the first vehicle drive device 100A, but is less effective in reducing torsional vibration of the input shaft IN to reduce noise that is caused by the vibration than in the case where the small diameter portion 73 is provided between the first supported portion 71 and the connection portion 72.

As described above, in both the first vehicle drive device 100A and the second vehicle drive device 100B, it is preferable that the small diameter portion 73 be provided between the first supported portion 71 and the connection portion 72.

As described above, by providing the small diameter portion 73 in the input shaft IN to reduce the rigidity of the input shaft IN, transmission of vibration can be reduced without increasing the size of the vehicle drive device 100 and increasing cost.

### [Other Embodiments]

Hereinafter, other embodiments will be described. The configuration of each embodiment described below is not limited to being applied alone, and can be applied in combination with the configurations of other embodiments as long as there is no contradiction.
(1) The above description illustrates the form in which the small diameter portion 73 of the input shaft IN is located so as to overlap the rotor shaft supported portion 84a as viewed in the radial direction along the radial direction R of the input shaft IN. However, when, for example, the dimension in the axial direction L of the vehicle drive device 100 allows it, the small diameter portion 73 and the rotor shaft supported portion 84a may not overlap each other as viewed in the radial direction.
(2) The above description illustrates the form in which the first input bearing B1a and the second rotor bearing B2b are supported by the same bearing support portion 18. However, the first input bearing B1a and the second rotor bearing B2b may be supported by different support portions.
(3) The above description illustrates the form in which the input shaft IN and the rotor shaft 84 are connected by spline engagement. However, the present invention is not limited to this, and the input shaft IN and the rotor shaft 84 may be connected using other configurations such as a key and a keyway. The input shaft IN and the rotor shaft 84 need only be connected so as not to rotate relative to each other.
(4) The above description illustrates the form in which the first housing chamber 5 and the second housing chamber 3 are separated from each other by the partition wall portion 4. However, the case body 2 may not include the partition wall portion 4 as long as the case body 2 is integrally formed so as to form the first housing chamber 5 and the second housing chamber 3.
(5) The above description illustrates the vehicle drive device 100 including the rotating electrical machine MG as a driving force source for the wheels W. However, the vehicle drive device 100 may be a hybrid drive device including both an internal combustion engine and the rotating electrical machine MG as driving force sources for the wheels W of the vehicle (e.g., various types of hybrid drive devices such as a so-called onemotor parallel hybrid drive device or a so-called two-motor split hybrid drive device).
(6) The above description illustrates the three-axis vehicle drive device 100 in which three axes, namely the first axis A1, the second axis A2, and the third axis A3, are parallel to each other. However, the vehicle drive device 100 may be a two-axis vehicle drive device in which two axes, namely the first axis A1 and the second axis A2, are parallel to each other. The vehicle drive device 100 may further have one or more axes different from the first axis A1, the second axis A2, and the third axis A3, namely may have four or more axes. In these cases, part of the axes may extend in a direction(s) that is not parallel to the remainder of the axes.

### [Summary of Embodiment]

Hereinafter, a brief summary of the vehicle drive device (100) described above will be provided.

In one aspect, a vehicle drive device (100) includes: a rotating electrical machine (MG) including a rotor (82) and a rotor shaft (84) that rotates with the rotor (82); an input shaft (IN) including a first gear (G1) and connected to the rotor shaft (84) so as to rotate with the rotor shaft (84); a pair of output members (OUT), the output members being drivingly connected to wheels (W), respectively; a counter gear mechanism (CG) including a second gear (G2) meshing with the first gear (G1), a third gear (G3) that rotates with the second gear (G2), and a connecting shaft (CX) connecting the second gear (G2) and the third gear (G3); a differential gear mechanism (DF) that includes a fourth gear (G4) meshing with the third gear (G3) and that distributes rotation of the fourth gear (G4) to the pair of output members (OUT); and a case (1) housing the rotating electrical machine (MG), the input shaft (IN), the counter gear mechanism (CG), and the differential gear mechanism (DF). The input shaft (IN) includes a first supported portion (71) supported by the case (1) via a first bearing (B1a) located on a first side (L1) in an axial direction with respect to the first gear (G1), a connection portion (72) located on the first side (L1) in the axial direction with respect to the first supported portion (71) and connected to the rotor shaft (84), and a small diameter portion (73) located between the first supported portion (71) and the connection portion (72) in the axial direction (L) and having a diameter (r73) smaller than an outside diameter (r71) of the first supported portion (71) and an outside diameter of the connection portion (72), the axial direction (L) being a direction along a rotation axis of the rotor (82), the first side (L1) in the axial direction being a side in the axial direction (L) on which the rotor (82) is located with respect to the first gear (G1), and a second side (L2) in the axial direction being an opposite side in the axial direction to the first side (L1) in the axial direction.

According to this configuration, the input shaft (IN) includes the small diameter portion (73) between the first supported portion (71) and the connection portion (72). This makes it possible to make an adjustment to partially reduce the rigidity of the portion that transmits torque from the rotor (82) to the first gear (G1). The resonance point of torsional vibration of the input shaft (IN) that is caused by vibration generated at the meshing portion of the plurality of gears is thus shifted, so that the sound pressure and vibration that are transmitted to the case (1) can be reduced. In other words, vibration can be reduced by a simple structure, namely by merely providing the small diameter portion (73) in part of the input shaft (IN). For example, vibration can be reduced more easily and at lower cost as compared to the case where vibration is reduced by changing the distance in the axial direction (L) between components (e.g., between the rotor (82) and the first gear (G1)). According to this configuration, vibration of the input shaft (IN) can thus be reduced to reduce noise that is caused by the vibration.

In the vehicle drive device (100), the rotor shaft (84) suitably includes a rotor shaft supported portion (84a) supported by the case (1) via a second bearing (B2b) located on the second side (L2) in the axial direction with respect to the rotor (82) and on the first side (L1) in the axial direction with respect to the first bearing (B1a), and the small diameter portion (73) is suitably located so as to overlap the rotor shaft supported portion (84a) as viewed in a radial direction along a radial direction (R) of the input shaft (IN).

If the small diameter portion (73) is located on, for example, the second side (L2) in the axial direction with respect to the rotor shaft supported portion (84a), the dimension in the axial direction (L) of the input shaft (IN) may increase by an amount corresponding to the area where the small diameter portion (73) is located. However, the small diameter portion (73) and the rotor shaft supported portion (84a) overlap each other as viewed in the radial direction. This can reduce an increase in dimension in the axial direction (L) of the vehicle drive device (100) that is caused by providing the small diameter portion (73).

In the vehicle drive device (100), the first bearing (B1a) is suitably supported by a bearing support portion (18) of the case (1), and the second bearing (B2b) is suitably supported by the same bearing support portion (18) as the first bearing (B1a) is.

Since the first input bearing (B1a) and the second rotor bearing (B2b) are supported by the same bearing support portion (18), vibration from the rotating electrical machine (MG) to the input shaft (IN) tends to be transmitted to the case (1). However, such transmission of vibration is reduced by providing the small diameter portion (73) as described above. In other words, even in the structure in which the first input bearing (B1a) and the second rotor bearing (B2b) are supported by the same bearing support portion (18) in order to achieve reduction in size, providing the small diameter portion (73) in the input shaft (IN) effectively reduces the transmission of vibration to the case (1) while reducing an increase in dimension in the axial direction (L).

In the vehicle drive device (100), an inner peripheral surface of the rotor shaft (84) is suitably provided with a spline engaging portion (84s),
an outer peripheral surface of the connection portion (72) is suitably provided with a spline engaged portion (72s), and
the small diameter portion (73) suitably has a smaller diameter than a diameter (r72v) of an imaginary circle connecting tops of protrusions of the spline engaged portion (72s).

According to this configuration, the small diameter portion (73) can be appropriately formed to reduce the rigidity of the small diameter portion (73) compared to the remaining part of the input shaft (IN). The diameter (r73) of the small diameter portion (73) need only be smaller than the diameter (r72v) of the imaginary circle connecting the tops of the protrusions of the spline engaged portion (72s), and may be greater than a diameter (r72c) of an imaginary circle connecting bottoms of recesses of the spline engaged portion (72s).

In the vehicle drive device (100), an inner peripheral surface of the rotor shaft (84) is suitably provided with a spline engaging portion (84s), an outer peripheral surface of the connection portion (72) is suitably provided with a spline engaged portion (72s), and the small diameter portion (73) suitably has a smaller diameter than the diameter (r72c) of the imaginary circle connecting the recesses of the spline engaged portion (72s).

According to this configuration as well, the small diameter portion (73) can be appropriately formed to reduce the rigidity of the small diameter portion (73) compared to the remaining part of the input shaft (IN). When the diameter (r73) of the small diameter portion (73) is equal to or smaller than the diameter of the imaginary circle connecting the bottoms of the recesses of the spline engaged portion (72s), machining of the spline engaged portion (72s) can be easily performed using the small diameter portion (73) adjacent to the spline engaged portion (72s) in the axial direction (L).

In the vehicle drive device (100), the input shaft (IN) suitably includes a first bearing positioning portion (77) located on the second side (L2) in the axial direction with respect to the first bearing (B1a).

The first bearing positioning portion (77) for positioning the first bearing (B1a) in the axial direction (L) is formed in the input shaft (IN). Therefore, a diameter (r75) of a portion of the input shaft (IN) that is located between the first supported portion (71) and the first gear (G1) is greater than the outside diameter (r71) of the first supported portion (71) along part of or the entire axial length of this portion of the input shaft (IN). An outside diameter of a portion of the input shaft (IN) that is located between the first supported portion (71) and the connection portion (72) can be made equal to or smaller than the outside diameter (r71) of the first supported portion 71. It is therefore suitable that the small diameter portion (73) be provided between the first supported portion (71) and the connection portion (72), namely in the portion that can be formed with a relatively small diameter, rather than in the portion where the outside diameter of the input shaft (IN) is increased.

### Description of the Reference Numerals

1: case, 18: bearing support portion, 71: first supported portion, 72: connection portion, 72s: spline engaged portion, 73: small diameter portion, 77: first bearing positioning portion, 82: rotor, 84: rotor shaft, 84a: rotor shaft supported portion, 84s: spline engaging portion, 100: vehicle drive device, B1a: first input bearing (first bearing), B2b: second rotor bearing (second bearing), CG: counter gear mechanism, CX: counter connecting shaft (connecting shaft), DF: differential gear mechanism, G1: input gear (first gear), G2: first counter gear (second gear), G3: second counter gear (third gear), G4: differential input gear (fourth gear), IN: input shaft, L: axial direction, L1: first side in axial direction, L2: second side in axial direction, MG: rotating electrical machine, OUT: output member, R: radial direction, W: wheel, r71: outside diameter of first supported portion, r72c: diameter of imaginary circle connecting bottoms of recesses of spline engaged portion, r72v: diameter of imaginary circle connecting tops of protrusions of spline engaged portion, r73: diameter of small diameter portion

## Claims

1. A vehicle drive device comprising:
a rotating electrical machine including a rotor and a rotor shaft that rotates with the rotor;
an input shaft including a first gear and connected to the rotor shaft so as to rotate with the rotor shaft;
a pair of output members, the output members being drivingly connected to wheels, respectively;
a counter gear mechanism including a second gear meshing with the first gear, a third gear that rotates with the second gear, and a connecting shaft connecting the second gear and the third gear;
a differential gear mechanism that includes a fourth gear meshing with the third gear and that distributes rotation of the fourth gear to the pair of output members; and
a case housing the rotating electrical machine, the input shaft, the counter gear mechanism, and the differential gear mechanism,
wherein the input shaft includes a first supported portion supported by the case via a first bearing located on a first side in an axial direction with respect to the first gear, a connection portion located on the first side in the axial direction with respect to the first supported portion and connected to the rotor shaft, and a small diameter portion located between the first supported portion and the connection portion in the axial direction and having a diameter smaller than an outside diameter of the first supported portion and an outside diameter of the connection portion,
the axial direction being a direction along a rotation axis of the rotor, the first side in the axial direction being a side in the axial direction on which the rotor is located with respect to the first gear, and a second side in the axial direction being an opposite side in the axial direction to the first side in the axial direction.

2. The vehicle drive device according to claim 1, wherein:
the rotor shaft includes a rotor shaft supported portion supported by the case via a second bearing located on the second side in the axial direction with respect to the rotor and on the first side in the axial direction with respect to the first bearing; and
the small diameter portion is located so as to overlap the rotor shaft supported portion as viewed in a radial direction along a radial direction of the input shaft.

3. The vehicle drive device according to claim 2, wherein:
the first bearing is supported by a bearing support portion of the case; and
the second bearing is supported by the same bearing support portion as the first bearing is.

4. The vehicle drive device according to any one of claims 1 to 3, wherein:
an inner peripheral surface of the rotor shaft is provided with a spline engaging portion;
an outer peripheral surface of the connection portion is provided with a spline engaged portion; and
the small diameter portion has a smaller diameter than a diameter of an imaginary circle connecting tops of protrusions of the spline engaged portion.

5. The vehicle drive device according to any one of claims 1 to 3, wherein:
an inner peripheral surface of the rotor shaft is provided with a spline engaging portion;
an outer peripheral surface of the connection portion is provided with a spline engaged portion; and
the small diameter portion has a smaller diameter than a diameter of an imaginary circle connecting bottoms of recesses of the spline engaged portion.

6. The vehicle drive device according to any one of claims 1 to 5, wherein the input shaft includes a first bearing positioning portion located on the second side in the axial direction with respect to the first bearing.
